# EUROPÄISCHE PATENTSCHRIFT

(11) **EP 2 315 084 B1**
(45) Veröffentlichungstag und Bekanntmachung des Hinweises auf die Patenterteilung: **05.12.2012**
(21) Anmeldenummer: 09173897.1
(22) Anmeldetag: 23.10.2009
(51) Int. Cl.: G05B 9/03, G05B 19/042

(54) **Fehlersicheres Verriegelungssystem**
Error-proof locking system
Système de verrouillage protégé contre les erreurs

(43) Veröffentlichungstag der Anmeldung: 27.04.2011
(73) Patentinhaber: SIEMENS AKTIENGESELLSCHAFT, 80333 München (DE)
(72) Erfinder: Wiesgickl, Bernhard, 92249 Vilseck (DE)

(56) Entgegenhaltungen:
- EP-A2- 2 066 079
- DE-A1- 19 925 552
- BECKER ET AL: "AS-Interface - Die L¦sung in der Automation passage" AS-INTERFACE DIE LOESUNG IN DER AUTOMATION. EIN KOMPENDIUM UEBER TECHNIK, FUNKTION, APPLIKATION, XX, XX, 1. Januar 2002 (2002-01-01), Seiten 133-139, XP002258215

## Beschreibung

Die Erfindung betrifft ein Verriegelungssystem für einen sicherheitsgerichteten Zugangsbereich aufweisend einen Aktor, einen Sensor und einen Codegenerator und ein Verfahren zur sicherheitsgerichteten Kommunikation eines Verriegelungssystems für einen sicherheitsgerichteten Zugangsbereich.

Derartige Vorrichtungen bzw. derartige Verfahren werden u.a. auf dem Gebiet der industriellen Automatisierungstechnik eingesetzt. In der Industrie werden beispielsweise Zugänge zu Gefahr verursachenden Maschinen und Anlagen oft mit Verriegelungseinrichtungen mit Zuhaltefunktion ausgerüstet. Derartige Verriegelungseinrichtungen verhindern beispielsweise einen unerlaubten oder unbewussten Zutritt einer Person in den Gefahrenbereich einer Maschine. Der Gefahrenbereich einer Maschine kann beispielsweise durch eine gefährliche Maschinenbewegung verursacht werden. Verriegelungssysteme werden auch dort eingesetzt, wo sie der Prozesssicherheit dienen. So wird beispielsweise verhindert, dass Unbefugte einen Maschinenablauf vor Vollendung eines kompletten Arbeitszyklus unterbrechen und möglicherweise Anlageschäden bzw. Produktionsausfälle verursachen. Um derartige Schäden zu verhindern werden Maschinen bzw. Anlagen beispielsweise umzäunt und die Zugangstür mit einem Verriegelungssystem versehen. Dieses Verriegelungssystem gewährleistet einen ungefährlichen, sicheren Zutritt, insbesondere für den Wartungs- oder Servicefall. Erfolgt ein unbefugter Zutritt, so kann das Verriegelungssystem einen Zugang detektieren und die gefährdende Anlage deaktivieren. Verriegelungssysteme werden somit an Maschinen und Anlagen eingesetzt, um eine Gefährdung für den Menschen und/oder einen Schaden an der Maschine auszuschließen.

Um Gefahren an Mensch und Maschine zu minimieren, wird versucht, das Verriegelungssystem so sicher wie möglich auszugestalten. Das Verriegelungssystem weist üblicherweise eine Verriegelungseinheit (Aktor) und eine Detektionseinheit (Sensor) auf. Die Verriegelungseinheit sorgt dafür, dass ein Zugang zu einem gefährdenden Bereich ermöglicht wird oder durch Verriegelung des Zugangsbereichs verhindert wird. Die Verriegelungseinheit weist ferner üblicherweise einen Verriegelungsüberwachungssensor auf, welcher detektiert, ob der Aktor den Zugangsbereich verriegelt hat oder nicht. Ein Sensor, welcher ebenso Bestand des Verriegelungssystems ist, detektiert, ob der Zugangsbereich geöffnet wurde bzw. ob ein Zugang stattgefunden hat. Dies kann beispielsweise über eine Lichtschranke aber auch über einen zwangsgeführten Öffner erfolgen. Der Aktor des Verriegelungssystems sorgt somit für das Ver- und Entriegeln des Zugangsbereichs, der Sensor des Verriegelungssystems detektiert, ob ein Zugang stattgefunden hat bzw. der Zugangsbereich geöffnet wurde.

Damit das Verriegelungssystem eine Deaktivierung einer Maschine bzw. Anlage herbeiführen kann, ist es vorzugsweise über ein Bussystem mit einer Auswerteeinheit verbunden. Das Verriegelungssystem sowie die Kommunikation über das Bussystem müssen hierbei Anforderungen an die Sicherheit erfüllen. Eine derartige sicherheitsgerichtete Kommunikation kann beispielsweise mittels AS-Interface Safety at Work erfolgen. Hierbei wird mittels eines Codes, welcher jeweils vier Bitstellen aufweist, eine sicherheitsgerichtete Kommunikation ermöglicht. Um sicherzustellen, dass das Verriegelungssystem seine ordnungsgemäße Funktion aufweist, wird mittels des Codes, welcher über das Kommunikationsprotokoll des Verriegelungssystems über das angeschlossne Bussystem gesandt wird, kontrolliert, ob ein ordnungsgemäßer Betrieb des Verriegelungssystems vorliegt. Eine Auswerteeinheit, welche über das Bussystem mit dem Verriegelungssystem verbunden ist, kennt die verwendeten Codes des Verriegelungssystems und kann somit durch eine Kontrolle des jeweiligen über das Bussystem von dem Verriegelungssystem gesandten Codes feststellen, ob eine ordnungsgemäßer Code und somit eine ordnungsgemäße Funktion des Verriegelungssystems vorliegt. Detektiert ein Verriegelungssystem ein Entriegeln oder einen Zugang bzw. ein Öffnen, so wird anstelle des vorgesehenen Codes ein vorgegebener Wert über das Kommunikationsprotokoll übermittelt. Im Fall von AS-I Safety at Work wird beispielsweise eine Null übertragen. Wäre der vierstellige Code beispielsweise eine 1010, so würde eine 0000 bei Vorliegen eines Entriegelns des Verriegelungssystems und eines Öffnens übermittelt werden.

DE 199 25 552 A1 offenbart eine Sicherheitsschaltanordnung zum Ein- und Ausschalten einer Stromversorgung eines Arbeitsgerätes mittels zweier Aktoren. Die Aktoren sind an einen Codegenerator angeschlossen. Von dem Codegenerator ist ein Zahlenwort ausgebbar, welches in zwei Teilworte unterteilt ist, deren Werte von jeweils einem Aktor beeinflussbar sind.

EP 2 066 079 A2 offenbart eine Vorrichtung zum Anschluss an einen Kommunikationsbus. Mittels dieser Vorrichtung kann der Status mehrerer Notschalter zur Kommunikation über den Kommunikationsbus codiert werden.

Die europäische Anmeldung EP 1 059 576 B1 offenbart ein Verfahren, in welchem ein vom Codegenerator ausgegebener Code in zwei Teilworte unterteilt wird und jeweils ein Teilwort von jeweils einem Aktor beeinflusst werden kann.

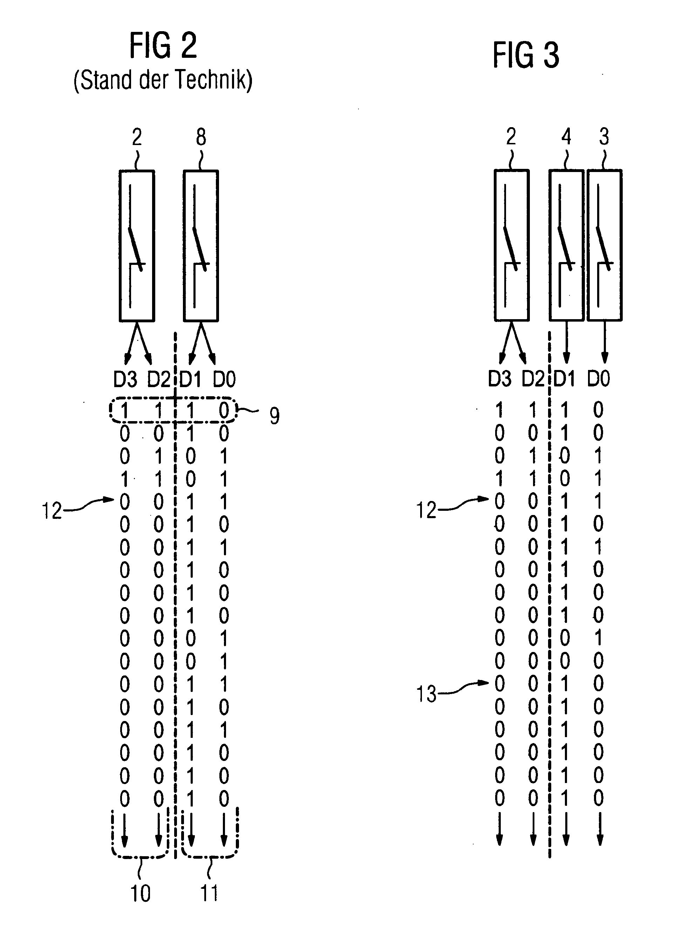

Ein über ein AS-I Safety at Work Bussystem kommunizierendes Verriegelungssystem kann somit den vierstelligen Code einer Codesequenz in zwei Teilworte aufteilen. FIG 2 dieser Anmeldung zeigt beispielhaft eine Folge ausgesandter Codes eines Verriegelungssystems gemäß dem Stand der Technik. Das Verriegelungssystem 1 weist einen Aktor 2 und einen dritten Sensor 8 auf. Ein erster Code 9 besteht hierbei aus vier Bitstellen, welche in zwei Teilbereiche unterteilt ist. Nämlich ein erster Kanal 11 des Codes, welcher die Bitstellen D0 und D1 betrifft und einen zweiten Kanal 10 des Codes, welcher die Bitstellen D2 und D3 betrifft. Der erste Kanal 11 des Codes kann von dem dritten Sensor 8 beeinflusst werden. Der zweite Kanal 10 des Codes kann von dem Aktor 2 beeinflusst werden. Für die sicherheitsgerichtete Kommunikation generiert zunächst ein Codegenerator des Verriegelungssystems einen Code, wie beispielsweise Code 9. Bei AS-I Safety at Work liegt dem Codegenerator eine Codesequenz mit acht unterschiedlichen Codes vor. Hierbei ist die Reihenfolge der acht Codes fest vorgegeben. Diese acht Codes der Codesequenz werden nach Durchlaufen eines achten Codes wiederholt. Eine mit dem Verriegelungssystem verbundene Auswerteeinheit weist ebenso diese Codesequenz auf und kann folglich kontrollieren, ob der vorgeschriebene Code von dem Verriegelungssystem ausgesandt wurde oder nicht. Ist der Zugangsbereich verriegelt und ein Öffnen bzw. ein Zugang hat nicht stattgefunden, so wird der vom Codegenerator generierte Code über ein Kommunikationsausgangssignal ausgegeben. Der Code 9 sowie die darauf folgenden drei Codes weisen eine vom Codegenerator generierte Codefolge auf. Wird nun hingegen der Zugangsbereich entriegelt und ein Zugang / Öffnen liegt nicht vor, so überschreibt der Aktor die in seinem Kanal (zweiter Kanal 10) liegenden Bitstellen des Codes mit einem vorgegebenen Wert. Der vorgegebene Wert ist im Fall von AS-I Safety at Work eine "0". Die zugehörigen Bitstellen des Aktors 2 D2 und D3 werden somit mit einer "0" überschrieben. Wie an der Stelle des Bezugszeichens 12 ersichtlich ist, weist der zweite Kanal 10 des Codes zwei "0-Bitstellen" auf. Die Bitstellen des dritten Sensors 8 blieben hingegen unverändert und beinhalten den vorgesehenen Code des Codegenerators für den ersten Kanal 11. Der dritte Sensor 8, welcher den Code "11" aufweist, hat folglich keinen Zugang bzw. kein Öffnen detektiert. Die darauffolgende Codefolge 0100 (D0,D1,D2,D3) zeigt weiterhin an, dass eine Entriegelung stattgefunden hat, jedoch ein Öffnen bzw. ein Zugang nicht stattgefunden hat. Würde der dritte Sensor 8 einen Zugang bzw. ein Öffnen detektieren, so würde auch dieser seine zugehörigen Bitstellen (D0, D1) mit einer 0 überschreiben. Eine Auswerteeinheit, welche den ausgesandten Code des Verriegelungssystems analysiert, kann somit anhand der empfangenen Codes den aktuellen Zustand des Verriegelungssystems ermitteln. Liegt der ihr bekannte vorgesehene Code vor, so kann die durch das Verriegelungssystem geschützte Anlage weiter in Betrieb bleiben. Liegt ein vorgegebener Wert für den ersten oder zweiten Kanal des Codes vor, so erfolgt eine Abschaltung der gefährdenden Anlage. Liegt hingegen eine Abweichung des vorgegebenen Codes vor, so erfolgt eine Abschaltung sowie Verriegelung der gefährdenden Anlage.

Erfolgt nun beispielsweise eine Abschaltung der Anlage durch einen Befehl des Aktors 2, welcher eine Entriegelung festgestellt hat, so weist der erste Kanal 11 des Sensors 8 weiterhin die für ihn vorgesehene Codefolge auf. Sobald der Aktor 2 wieder eine Verriegelung feststellt, nimmt auch der zweite Kanal 10 wieder die vom Codegenerator vorgegebene Codefolge ein und die Auswerteeinheit detektiert einen ordnungsgemäßen Zustand und aktiviert die Anlage. Tritt nun hingegen der unerwünschte Fehlerfall ein, dass z.B. der dritte Sensor 8 einen Zugang bzw. ein Öffnen nicht detektiert, da dieser defekt ist oder einen Zugang bzw. ein Öffnen detektiert, jedoch ein interner Gerätefehler das Überschreiben der ersten und zweiten Bitfolge des ersten Kanals 11 verhindert, so kann eine Gefährdung an Mensch oder Maschine erfolgen. Wird nun beispielsweise die Anlage durch eine Entriegelung des Aktors 2 angehalten, so nehmen die Bitstellen des Aktors 2 den Wert "0" ein. Öffnet nun eine Person den Zugangsbereich bzw. geht in den gefährdenden Bereich, so weist der erste Kanal 11 weiterhin die vom Codegenerator generierten Codes auf. Eine Auswerteeinheit detektiert folglich kein Öffnen bzw. keinen Zugang. Erfolgt nun das Verriegeln des Zugangsbereichs, so nimmt der zweite Kanal 10 wieder die vom Codegenerator generierten Codestellen ein. Eine Auswerteeinheit, welche den gesamten Code analysiert, erkennt, dass der empfangene Code mit dem hinterlegten Code übereinstimmt. Die Anlage wird folglich wieder aktiviert, obwohl der Sensor 8 defekt ist und der Zugangsbereich geöffnet ist bzw. sich die Person im Zugangsbereich befindet. Für den Fall, dass der Aktor 2 einen internen Verriegelungsüberwachungssensor zur Kontrolle des Vorliegens einer Verriegelung aufweist, so tritt der soeben beschriebene Fehlerfall ebenso ein, sofern dieser Verriegelungsüberwachungssensor defekt ist.

Es kann somit ein Fehlerzustand des Verriegelungssystems unbemerkt durch Ausfall des Sensors und sofern vorhanden des Verriegelungsüberwachungssensor eintreten und hierdurch ein gefährdender Zustand für Mensch und/oder Maschine eintreten.

Es ist daher Aufgabe der vorliegenden Erfindung, die Fehlersicherheit eines Verriegelungssystems zu verbessern.

Erfindungsgemäß wird diese Aufgabe gelöst durch eine Vorrichtung gemäß Anspruch 1 und das Verfahren gemäß Anspruch 8. Vorteilhafte Weiterbildungen der Erfindung sind in den jeweiligen abhängigen Ansprüchen definiert.

Der Aktor sorgt für das Verriegeln und/oder Entriegeln des Zugangsbereichs. Durch das Entriegeln des Zugangsbereichs wird das Öffnen des Zugangsbereichs bzw. der Zugang in den Zugangsbereich ermöglicht. Das Verriegeln des Zugangsbereichs führt dazu, dass das Öffnen/der Zugang verhindert wird.

Liegt beispielsweise eine Öffnung/ein Zugang vor, so detektiert dies sowohl der erste als auch der zweite Sensor und die erste bzw. zweite Bitstelle nimmt den ersten bzw. zweiten vorgegebenen Wert ein. Der erste und zweite vorgegebene Wert für die erste und zweite Bitstelle darf folglich im ordnungsgemäßen Betrieb des Verriegelungssystems nur paarweise auftreten, da ein Öffnen/Zugang sowohl von dem ersten als auch von dem zweiten Sensor erkannt werden muss.

Die Auswerteeinheit, welche über ein Bussystem mit dem Verriegelungssystem verbunden ist und die ausgesandten Codes des Verriegelungssystems analysiert, kennt die Codes, welche von dem Codegenerator des Verriegelungssystems generiert werden. Ferner kennt die Auswerteeinheit die Bedeutung des ersten, zweiten und dritten vorgegebenen Werts. Werden beispielsweise mehrere unterschiedliche Codes vom Codegenerator generiert, so sind die vom Codegenerator generierten Codes sowie deren Reihenfolge in der Auswerteeinheit hinterlegt. Das Übermitteln der vorgegebenen Codes sowie der Werte kann beispielsweise während der Inbetriebnahme erfolgen. Die Auswerteeinheit kann folglich einen Abgleich jeweils des ausgesandten Codes mit dem zugehörigen hinterlegten Code bzw. mit den hinterlegten Werten durchführen und diesen auf Korrektheit überprüfen. Die Auswerteeinheit vergleicht demzufolge die erste, zweite und dritte Bitstelle des ausgesandten Codes mit einer zugehörigen ersten, zweiten und dritten Bitstelle des vom Codegenerator vorgegebenen Codes für das Kommunikationsausgangssignal. Liegt eine Übereinstimmung vor, so wurde weder der Aktor entriegelt, noch hat ein Zugang bzw. ein Öffnen stattgefunden. Liegt keine vollständige Übereinstimmung vor, so erfolgt vorzugsweise ein Vergleich der abweichenden Bitstelle des ausgesandten Codes mit dem entsprechenden vorgegebenen Wert. Stimmt dieser Überein so liegt eine Entriegelung bzw. eine Öffnung oder ein Zugang vor. Für den Fall der Öffnung und des Zugangs müssen jedoch die erste und zweite Bittstelle den vorgegebnen ersten bzw. zweiten Wert aufweisen. Weist nur eine dieser Bitstellen den vorgegebenen wert auf, so liegt ein Fehler vor.

Anhand der erfindungsgemäßen Vorrichtung kann ein fehlerhafter Betrieb vermieden sowie ein auftretender Fehler vorzeitig erkannt werden. Weist beispielsweise lediglich eine Bitstelle (erste oder zweite Bitstelle) den vorgegebenen Wert auf und die erste und zweite Bitstelle entsprechen nicht dem vorgegebenen Code für die erste und zweite Bitstelle, so liegt kein ordnungsgemäßer Zustand vor. Es ist beispielsweise ein Sensor defekt. Die erste und zweite Bitstelle, welche dem ersten und zweiten Sensor zugeordnet sind, müssen folglich entweder gemeinsam ihren vorgesehenen Code des Codegenerators aufweisen oder gemeinsam den ersten bzw. zweiten vorgegebenen Wert aufweisen. Sobald eine Abweichung zum vorgegebenen Code bzw. zum vorgegebenen Wert vorliegt, liegt eine fehlerhafte Kommunikation seitens des ersten und zweiten Sensors und somit seitens des Verriegelungssystems vor. Eine Auswerteeinheit, welche die ausgesandten Codes analysiert, kann einen derartigen Fehler diagnostizieren.

Liegt der Auswerteeinheit der erste, zweite und dritte vorgegebene Wert vor, so erfolgt eine beabsichtigte Deaktivierung der vom Verriegelungssystem abgeschirmten gefährdenden Anlage. Liegt der Auswerteeinheit hingegen eine fehlerhafte Codefolge oder lediglich der erste oder zweite vorgegebene Wert vor, so liegt ein fehlerhafter Zustand vor, welcher ebenso zu einer Deaktivierung der vom Verriegelungssystem abgeschirmten gefährdenden Anlage führen sollte. Im Fall der fehlerhaften Codefolge sollte zudem eine Verriegelung der gefährdenden Anlage erfolgen.

Soll beispielsweise ein Zutritt zu einer Anlage ermöglicht werden, so erfolgt vorzugsweise zunächst die Entriegelung des Zugangsbereichs durch den Aktor. Das Verriegelungssystem überschreibt daraufhin die dritte Bitstelle des Codes mit dem dritten vorgegebenen Wert. Die an das Bussystem angeschlossene Auswerteeinheit analysiert den ausgesandten Code des Verriegelungssystems und erkennt die Entriegelung. Daraufhin wird vorzugsweise die Gefahr verursachende Anlage deaktiviert. Sobald der Zugangsbereich entriegelt ist, kann ein Öffnen des Zugangsbereichs erfolgen. Der erste und zweite Sensor detektieren eine derartige Öffnung. Das Verriegelungssystem überschreibt folglich die erste und zweite Bitstelle mit dem ersten und zweiten vorgegebenen Wert. Die Auswerteeinheit kann durch Analyse des ausgesandten Codes des Verriegelungssystems erkennen, dass der Zugangsbereich geöffnet wurde. Würde nun beispielsweise an der ersten Bitstelle lediglich der erste vorgegebene Wert vorliegen und die zweite Bitstelle würde weiterhin den vom Codegenerator gelieferten Wert anzeigen, so würde erkannt werden, dass beispielsweise der zweite Sensor defekt ist. Der im Stand der Technik beschriebene Fehlerfall kann folglich durch ein erfindungsgemäßes Verriegelungssystem aufgedeckt und darauf sicherheitstechnisch richtig reagiert werden. Eine Gefährdung kann somit vermieden werden. Dadurch, dass der erste und zweite Sensor nur gleichzeitig ihren vorgegebenen Wert anzeigen dürfen, kann ein Rückschluss auf die ordnungsgemäße Funktion des Sensors und somit ein Rückschluss auf die ordnungsgemäße Funktion des Verriegelungssystems gewonnen werden.

Das erfindungsgemäße Verriegelungssystem kann folglich in Anwendungsbereichen mit sehr hohen Sicherheitsanforderungen eingesetzt werden.

In einer vorteilhaften Ausführungsform der Erfindung ist das Bussystem ein AS-I Safety at Work-Bussystem, wobei demnach der Code vier Bitstellen aufweist, wobei das Verriegelungssystem, insbesondere der Aktor, derart ausgebildet ist, dass durch das Entriegeln ferner die vierte Bitstelle des Codes einen vierten vorgegebenen Wert einnimmt.

Der Ausdruck erste, zweite dritte und vierte Bitstelle hat in dieser Anmeldung hinsichtlich der Reihenfolge der im Code verwendeten Bitstellen keine beschränkende Wirkung; d.h. im ausgesandten Code können beispielsweise die Bitstellen des Aktors (dritte und vierte) eine erste und zweite Bitstelle des ausgesandten Codes einnehmen und die Bitstellen der Sensoren (erste und zweite) die dritte und vierte Bitstelle des ausgesandten Codes einnehmen. Die Auswerteeinheit sollte jedoch die Zugehörigkeit der jeweiligen Bitstellen des empfangenen Codes hinsichtlich der Zugehörigkeit zum Aktor und Sensor kennen.

Bei AS-I Safety at Work weist der Code jeweils vier Bitstellen auf, wobei ein Codegenerator eines Slaves, wie beispielsweise ein Verriegelungssystem, eine Codesequenz mit acht Codes aufweist. Hierbei ist die Reihenfolge der acht Codes fest vorgegeben. Diese acht Codes der Codesequenz werden nach Durchlaufen eines achten Codes wiederholt. Einer Auswerteeinheit ist ebenso diese Codesequenz bekannt, so dass jeweils ein Abgleich mit dem über das Bussystem empfangenen Code der Verarbeitungseinheit erfolgen kann. Das Verriegelungssystem überträgt hierbei vorzugsweise die Informationen hinsichtlich der Entriegelung bzw. des Zugangs/Öffnens jeweils paarweise im Code. Die Entriegelung (Aktor) wird z.B. mit der ersten und zweiten Bitstelle des Codes übertragen und der Zugang/das Öffnen (Sensor) wird mit der dritten und vierten Bitstelle übertragen. Ebenso kann der Zugang/das Öffnen mit der ersten und zweiten Bitstelle und das Entriegeln mit der dritten und vierten Bitstelle übertragen werden.

Vorteilhafterweise ist der erste, zweite, dritte und sofern vorhanden vierte vorgegebene Wert gleich. Bei AS-I Safety at Work ist beispielsweise der erste, zweite, dritte und vierte vorgegebene Wert eine "0". Liegt eine Entriegelung vor oder wurde der Zugangsbereich geöffnet, so ist der vorgegebene Wert eine "0" und die erste, zweite, dritte und vierte Bitstelle des Codes wird mit einer "0" überschrieben. Der Auswerteeinheit ist die Bedeutung des vorgegebenen Wertes, in diesem Fall der "0", bekannt. Da der Aktor entweder verriegelt oder entriegelt ist, muss dieser entweder die vorgegebene Codefolge im dritten und vierten Bit des ausgesandten Codes aufweisen oder den vorgegebenen Wert, in diesem Fall jeweils eine "0" an der dritten und vierten Bitstelle des ausgesandten Codes aufweisen. Der Auswerteeinheit ist ferner bekannt, dass der erste und zweite Sensor gemeinsam denselben Zustand aufweisen müssen. Entweder hat ein Zugang/Öffnen stattgefunden, was zur Folge hat, dass die erste und zweite Bitstelle jeweils eine "0" aufweisen muss oder es hat kein Zugang/Öffnen stattgefunden, was bedeutet, dass die erste und zweite Bitstelle des ausgesandten Codes den vom Codegenerator generierten Code für die erste und zweite Bitstelle aufweisen muss. Es ergibt sich somit für den jeweiligen Code eine Logik, welche er aufweisen muss. Die Auswerteeinheit kann den ausgesandten Code des Verriegelungssystems daraufhin analysieren. Weist der zu analysierende Code an der dritten und vierten Bitstelle eine "0" auf und stimmt diese Bitfolge nicht mit dem vom Codegenerator vorgegebenen Code überein, so hat eine Entriegelung stattgefunden. Weist der vom Codegenerator zu analysierende Code an der ersten und zweiten Bitstelle eine "0" auf und ist dies nicht durch den vorgegebenen Code des Codegenerators vorgegeben, so hat ein Zugang/Öffnen stattgefunden. Weist hingegen die erste und zweite Bitstelle jeweils eine "0" auf und die dritte und vierte Bitstelle weist den vorgegebenen Code auf, so würde dies bedeuten, dass ein Zugang/Öffnen stattgefunden hat und eine Verriegelung des Zugangs erfolgt ist. Ein derartiger Zustand ist jedoch eigentlich durch mechanische Verriegelungsmaßnahmen verhindert und somit nicht erlaubt. Dadurch, dass das Verriegelungssystem mit Hilfe des ersten und zweiten Sensors gleichzeitig eine Detektion des Öffnens/Zugangs hinsichtlich des Zugangsbereichs durchführt und der erste Sensor die erste Bitstelle des Codes mit dem vorgegebenen Wert beeinflussen kann und der zweite Sensor die zweite Bitstelle des Codes mit dem vorgegebenen Wert beeinflussen kann, wird gezielt bei einem Defekt eines der beiden Sensoren eine Codeverfälschung erzeugt. Der Code darf bei einer Abweichung zum vorgegebenen Code an der ersten und zweiten oder dritten und vierten Bitstelle nicht lediglich einen einzelnen vorgegebenen Wert aufweisen. Eine derartige Codeverfälschung wird durch eine Auswerteeinheit erkannt und es erfolgt eine Abschaltung/Verreigelung der gefährdenden Anlage. Bei AS-I Safety at Work können somit die bestehenden Kommunikationsvorgaben für das Busprotokoll genutzt werden um bei auftreten eines unerwünschten Fehlers eine gezielte Codeverfälschung herbeizuführen. Es werden folglich die Anforderungen hinsichtlich der Sicherheit verbessert bei gleichzeitiger Nutzung eines bestehenden Kommunikationsprotokolls.

In einer weiteren Ausführungsform der Erfindung ist der erste Sensor dazu ausgebildet, die erste Bitstelle mit dem ersten vorgegebenen Wert zu belegen, der zweite Sensor dazu ausgebildet, die zweite Bitstelle mit dem zweiten vorgegebenen Wert zu belegen und der Aktor dazu ausgebildet, die dritte Bitstelle mit dem dritten vorgegebenen Wert und sofern vorhanden die vierte Bitstelle mit dem vierten vorgegebenen Wert zu belegen.

Dadurch, dass die Sensoren bzw. der Aktor direkt die Bitstellen des Ausgangssignals beeinflussen können, wird die Sicherheit des Verriegelungssystems erhöht.

In einer weiteren vorteilhaften Ausführungsform der Erfindung ist der Aktor eine Magnettürüberwachung, eine Türverriegelung, eine Verriegelungseinrichtung oder eine Sicherheitszuhaltung ist.

Der Aktor sorgt folglich für eine Verriegelung mit Zuhaltefunktion. Ist der Zugangsbereich verriegelt, so wird ein Öffnen des Zugangsbereichs durch die Verriegelung des Aktors verhindert. Lediglich wenn der Aktor den Zugangsbereich entriegelt, ist ein Öffnen bzw. ein Zugang möglich.

In einer weiteren vorteilhaften Ausführungsform der Erfindung sind der erste und zweite Sensor eine Schutztürüberwachung, ein Näherungsschalter, ein zwangsgeführter Öffner oder eine Lichtschranke.

In einer weiteren vorteilhaften Ausführungsform der Erfindung weist ein Automatisierungssystem ein erfindungsgemäßes Verriegelungssystem und die Auswerteeinheit auf, wobei die Auswerteeinheit
- über das Bussystem mit dem Verriegelungssystem verbindbar ist,
- einen Speicher zum Hinterlegen des vom Codegenerator generierten Codes des Verriegelungssystems und einer Bedeutung des ersten, zweiten, dritten und sofern vorhanden vierten vorgegebenen Wertes aufweist,
- Mittel zur Feststellung des vorliegenden Zustands und eines ordnungsgemäßen Betriebes des Aktors, des ersten und zweiten Sensors durch einen Vergleich des Codes, welcher von dem Verriegelungssystem ausgesandt wurde, mit einem im Speicher hinterlegten Code und mit dem ersten, zweiten dritten und sofern vorhanden vierten vorgegebenen Wert, aufweist.

Dadurch, dass die Auswerteeinheit den vom Codegenerator generierten Code des Verriegelungssystems sowie die Bedeutung des ersten, zweiten, dritten und sofern vorhanden vierten vorgegebenen Wertes aufweist, kann die Auswerteeinheit durch eine Analyse des ausgesandten Codes des Verriegelungssystems überprüfen, ob die ordnungsgemäße Funktion vorliegt oder eine fehlerhafte Codefolge ausgesandt wurde und folglich ein fehlerhafter Zustand vorliegt. Für einen ordnungsgemäßen Zustand des Verriegelungssystems muss der ausgesandte Code:
- mit dem vom Codegenerator generierten Code vollständig übereinstimmen, oder
- die Bitstellen des Aktor mit den zugehörigen vorgegebenen Werten übereinstimmen und die Bitstellen der beiden Sensoren mit den vom Codegenerator generierten zugehörigen Bitstellen übereinstimmen, oder
- die Bitstellen des Aktor und der beiden Sensoren mit den zugehörigen vorgegebenen Werten vollständig übereinstimmen.

Im ordnungsgemäßen Zustand gibt es folglich kein Szenario in welchem lediglich eine Bitstelle des Aktors oder des Sensors den zugehörigen vorgegebenen Wert aufweist. Dies würde für einen fehlerhaften Betrieb stehen.

Durch den Einsatz des ersten und zweiten Sensors wird das ermöglichen eines Fehlers hinsichtlich eines Nichtdetektierens eines Öffnens bzw. Zugangs des Verriegelungssystems minimiert. Sobald ein Sensor einen Defekt aufweist, erfolgt eine Codeverfälschung, welche letztendlich von der Auswerteeinheit detektiert wird und zu einer Abschaltung und Verriegelung der gefährdenden Anlage führt.

In einer weiteren vorteilhaften Ausführungsform der Erfindung weist die Auswerteeinheit Analysemittel zum Analysieren der ersten Bitstelle und der zweiten Bitstelle des von dem Verriegelungssystem ausgesandten Codes auf und Ausgabemittel zur Ausgabe einer Fehlermeldung.

Hierdurch kann eine Codeverfälschung analysiert werden und über die Fehlermeldung vorzugsweise der vorliegende Fehler angezeigt werden. Es kann beispielsweise eine Information ausgegeben werden, welche anzeigt, ob der erste Sensor, der zweite Sensor oder der Aktor defekt ist.

Im Folgenden werden die Erfindung und Ausgestaltungen der Erfindung anhand der in den Figuren dargestellten Ausführungsbeispiele näher beschrieben und erläutert. Es zeigen:
- FIG 1: Eine schematische Darstellung eines Verriegelungs- systems , welches über ein Bussystem mit einer Aus- werteeinheit verbunden ist,
- FIG 2: beispielhaft eine Folge ausgesandter Codes eines Verriegelungssystems gemäß dem Stand der Technik, und
- FIG 3: eine beispielhafte Folge ausgesandter Codes eines Verriegelungssystems.

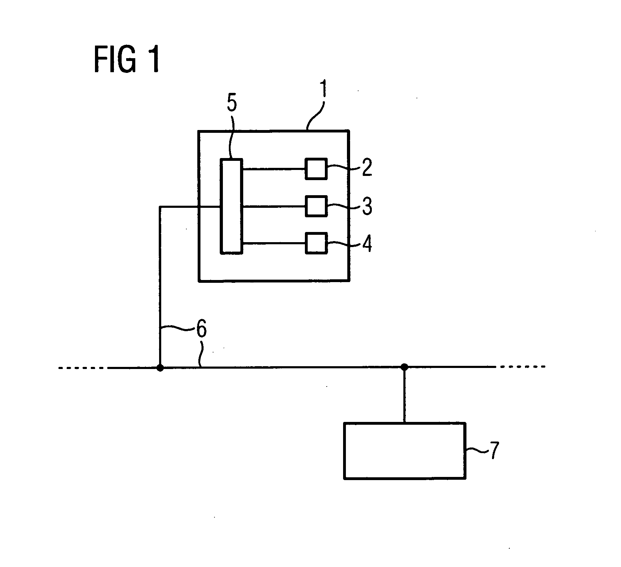

FIG 1 zeigt eine schematische Darstellung eines Verriegelungssystems 1, welches über ein Bussystem 6 mit einer Auswerteeinheit 7 verbunden ist. Das Verriegelungssystem 1 weist hierbei einen Aktor 2, einen ersten Sensor 3, einen zweiten Sensor 4 und einen Codegenerator 5 auf. Das Verriegelungssystem 1 überwacht einen Zugangsbereich zu einem nicht dargestellten gefährdenden Bereich. In diesem Bereich kann sich beispielsweise eine Maschine befinden, welche einen Schutz vor unbefugtem Betreten verlangt und eine Gefahr für einen Menschen darstellt. Das Verriegelungssystem 1 verriegelt folglich den Zugang zu einem Gefahr verursachenden Bereich. Die Verriegelung des Zugangs erfolgt hierbei über den Aktor 2. Dieser Aktor 2 kann eine Verriegelung des Zugangsbereichs sowie eine Entriegelung des Zugangsbereichs herbeiführen. Ferner weist der Aktor 2 einen Verriegelungsüberwachungssensor auf, welcher detektiert, ob der Aktor eine Verriegelung oder eine Entriegelung durchgeführt hat. Der erste und zweite Sensor 3,4 überwachen den Zugangsbereich dahingehend, ob ein Öffnen einer Zugangstür zu dem Gefahr verursachenden Bereich erfolgt. Ebenso ist es beispielsweise möglich, einen Zugang mittels einer Lichtschranke zu detektieren.

Um den Anforderungen eines sicherheitsgerichteten Systems zu genügen, erfolgt die Kommunikation mittels eines AS-Interface Safety at Work-Bussystems. Der Codegenerator 5 generiert die für die Kommunikation auf dem Bussystem erforderlichen Codes. Hierfür liegt dem Codegenerator 5 die dem Verriegelungssystem 1 zugewiesene Codesequenz vor. Diese Codesequenz besteht aus acht unterschiedlichen Codes, welche der Reihe nach versandt werden. Bei Erreichen des letzten Codes wird bei dem nächsten Ausgangssignal mit dem ersten Code wieder begonnen. Der Auswerteeinheit 7 liegt ebenso diese Codesequenz vor, so dass sie kontrollieren kann, ob die von dem Verriegelungssystem 1 ausgesandten Signale den korrekten Code enthalten und folglich ein ordnungsgemäßer Betrieb seitens des Verriegelungssystems 1 vorliegt. Im verriegelten Zustand und geschlossenem Zustand sendet das Verriegelungssystem 1 über das AS-I Safety at Work-Bussystem 6 die vom Codegenerator 5 generierten Codes. Erfolgt nun ein Entriegeln des Zugangsbereichs, so beeinflusst der Aktor 2 den für das Kommunikationsausgangssignal vom Codegenerator 5 bereitgestellten Code. Der Aktor 2 weist hierfür einen dritten und vierten vorgegebenen Wert auf, welcher bei AS-I Safety at Work den Wert "0" entspricht. Der Aktor 2, welcher die dritte und vierte Bitstelle des vierstelligen Codes beeinflussen kann, signalisiert durch Überschreiben der dritten und vierten Bitstelle jeweils mit einer "0" (dem vorgegebenen Wert), dass eine Entriegelung stattgefunden hat. Das nun von dem Verriegelungssystem ausgesandte Signal stimmt nun lediglich an der ersten und zweiten Bitstelle mit dem vom Codegenerator vorgegebenen Wert überein. An der dritten und vierten Bitstelle weist es eine "0" auf. Die Auswerteeinheit 7, welcher der vorgegebene Wert des Aktors sowie des ersten und zweiten Sensors bekannt ist, kann das Signal dahingehend deuten, dass eine Entriegelung des Zugangsbereichs stattgefunden hat. Die Auswerteeinheit 7 deaktiviert die in dem Gefahrenbereich befindende Gefahren verursachende Maschine. Der erste Sensor 3 sowie der zweite Sensor 4 weist ebenso einen ersten und zweiten vorgegebenen Wert auf. Wie bei dem Aktor ist der erste und zweite vorgegebene Wert jeweils eine "0". Detektiert der erste Sensor 3, dass der Zugang geöffnet wurde, so überschreibt er die ihm zugeordnete erste Bitstelle des für das Kommunikationsausgangssignal vorliegenden Codes, welcher von dem Codegenerator 5 generiert wurde. Sofern der erste Sensor 3 ein Öffnen des Zugangs detektiert hat, muss der zweite Sensor 4 ebenso ein Öffnen detektieren. Der erste Sensor 3 sowie der zweite Sensor 4 müssen jeweils den gleichen Zustand aufweisen, d.h. sie müssen entweder ein Öffnen detektieren oder sie müssen detektieren, dass keine Öffnung des Zugangsbereichs vorliegt. Folglich muss in einem Ausgangssignal des Verriegelungssystems 1 die erste Bitstelle, welche dem ersten Sensor 3 zugeordnet ist und die zweite Bitstelle, welche dem zweiten Sensor 4 zugeordnet ist, im Falle einer Öffnung des Zugangsbereichs an der ersten und zweiten Bitstelle den ersten und zweiten vorgegebenen Wert, nämlich die "0", aufweisen.

Stimmt folglich bei einem empfangenen Code die erste und zweite Bitstelle nicht mit der vom Codegenerator vorgegebenen Codefolge überein und weist die erste Bitstelle den ersten vorgegebenen Wert auf und die zweite Bitstelle weist nicht den zweiten vorgegebenen Wert auf, so liegt ein Fehler seitens des zweiten Sensors 4 vor. Die Auswerteeinheit 7 kann einen derartigen fehlerhaften Zustand erkennen, da sie einen Abgleich mit der vom Codegenerator 5 generierten Codefolge durchführt. Sie erkennt, dass die erste und zweite Bitstelle nicht gemeinsam den ersten und zweiten vorgegebenen Wert aufweist. Eine fehlerhafte Kommunikation liegt folglich vor und die Anlage wird deaktiviert. Der Vorteil des Verriegelungssystems 1 besteht darin, dass ein bereits verwendetes Kommunikationsprotokoll genutzt wird und durch das gezielte Generieren eines Kommunikationsfehlers eine fehlerhafte Funktion des Verriegelungssystems angezeigt wird und letztendlich für ein Abschalten der Gefahren verursachenden Komponente sorgt.

FIG 2 zeigt beispielhaft eine Folge ausgesandter Codes eines Verriegelungssystems gemäß dem Stand der Technik. Das Verriegelungssystem weist hierbei einen Aktor 2 und einen dritten Sensor 8 auf. In dieser Figur ist eine Abfolge der von dem Verriegelungssystem ausgesandten Codes dargestellt. Der erste ausgesandte Code 9 weist hierbei die Codefolge "0111" auf, wobei die Spalte D0 für das erste Bit steht, die Spalte D1 für das zweite Bit steht, die Spalte D2 für das dritte Bit steht und die Spalte D3 für das vierte Bit des jeweiligen versendeten Codes steht. Der dritte Sensor 8 kann hierbei die erste und zweite Bitstelle (D0,D) des ausgesandten Codes beeinflussen. Die erste und zweite Bitstelle bilden einen ersten Kanal 11. Der Aktor kann die dritte und vierte Bitstelle (D2,D3) beeinflussen. Die dritte und vierte Bitstelle bilden einen zweiten Kanal 10. Weist der Aktor einen verriegelten Zustand auf, so erfolgt keine Beeinflussung seines zweiten Kanals 10. Detektiert der dritte Sensor 8 kein Öffnen eines Zugangsbereichs, so wird der erste Kanal 11 nicht beeinflusst. Folglich stimmen die Codes, welche für das Kommunikationsausgangssignal vorgesehen sind, mit den vom Codegenerator generierten Codes überein. An der mit dem Bezugszeichen 12 markierten Stelle des Codes liegt jeweils eine "0" für die dritte und vierte Bitstelle vor, welche nicht mit der vom Codegenerator generierten Codefolge übereinstimmt. Folglich kann eine Auswerteeinheit erkennen, dass eine Entriegelung des Zugangsbereichs durch den Aktor 2 stattgefunden hat. Die erste und zweite Bitfolge des mit dem Bezugszeichen 12 gekennzeichneten Codes weist jedoch noch eine Übereinstimmung mit der vom Codegenerator vorgesehenen Codefolge für die erste und zweite Bitstelle auf. Folglich wurde der Zugangsbereich nicht geöffnet. Liegt nun jedoch ein Defekt bei dem dritten Sensor 8 vor, so dass dieser nicht den vorgegebenen Wert einnehmen kann und folglich die erste und zweite Bitstelle nicht auf "0" setzen kann, so kann ein unerwünschter Gefahr verursachender Fehlerzustand eintreten. Da die erste und zweite Bitstelle auf "0" steht, ist die Anlage deaktiviert. Wird jedoch nun der Zugangsbereich wieder verriegelt, so dass die dritte und vierte Bitstelle des ausgesandten Codes die vom Codegenerator vorgesehene Codefolge aufweist, so wertet eine Auswerteeinheit dies als sicheren Zustand und aktiviert die Gefahren verursachende Anlage. Der Zugangsbereich kann jedoch wegen dem defekten Sensor 8 geöffnet sein, so dass ein Zutritt in den Gefahren verursachenden Bereich durch eine Person erfolgen kann. Für den Fall, dass der Aktor 2 einen internen Verriegelungsüberwachungssensor aufweist, muss ebenso dieser Sensor defekt sein, da ansonsten detektiert werden kann, dass keine Verriegelung stattgefunden hat.

FIG 3 zeigt eine beispielhafte Folge ausgesandter Codes eines Verriegelungssystems. Das Verriegelungssystem weist hierbei einen Aktor 2, einen ersten Sensor 3 und einen zweiten Sensor 4 auf. Der Aktor 2 kann die dritte und vierte Bitfolge (D2, D3) des für das Kommunikationsausgangssignal vorgesehenen Codes beeinflussen. Der erste Sensor 3 beeinflusst die erste Bitstelle (D0) des für das Kommunikationsausgangssignal vorgesehenen Codes. Der zweite Sensor 4 beeinflusst die zweite Bitstelle (D1) des für das Kommunikationsausgangssignal vorgesehenen Codes. Das Beeinflussen des für das Kommunikationsausgangssignal vorgesehenen Codes erfolgt durch einen vorgegebenen Wert, welcher in diesem Beispiel für den Aktor 2, den ersten und zweiten Sensor 3,4 eine "0" darstellt. Ist der Aktor 2 im verriegelten Zustand, so erfolgt keine Beeinflussung der dritten und vierten Bitstelle. Detektiert der erste und zweite Sensor 3,4, dass der Zugang nicht geöffnet ist, so erfolgt keine Beeinflussung der ersten und zweiten Bitstelle. Der erste und zweite Sensor 3,4 muss hinsichtlich des erwünschten Zustands paarweise reagieren; d.h. detektiert der erste Sensor 3, dass der Zugang geöffnet wurde, so muss der zweite Sensor 4 ebenfalls dies detektieren, ansonsten ist der zweite Sensor 4 defekt. Selbiges gilt umgekehrt für den ersten Sensor 3. Dadurch, dass der erste Sensor 3 bzw. der zweite Sensor 4 bei einem geöffneten Zugang gleichzeitig den vorgegebenen Wert aufweisen müssen, kann durch eine Kontrolle des Kommunikationsausgangssignals durch eine Auswerteeinheit kontrolliert werden, ob beide Sensoren 3,4 ordnungsgemäß funktionieren. Der durch Bezugszeichen 12 gekennzeichnete Code zeigt, dass der Aktor 2 entriegelt ist. Hierbei weist die dritte und vierte Bitstelle jeweils eine "0" auf und weicht von der für die dritte und vierte Bitstelle vorgegebenen Codefolge des vom Codegenerator generierten Codes ab.

Der durch Bezugszeichen 13 gekennzeichnete Code stellt ein Defekt des zweiten Sensors 3 dar. Hierbei weist die erste Bitstelle des ersten Sensors eine "0" auf und weicht von der vom Codegenerator generierten Codefolge für die erste Bitfolge ab. Der zweite Sensor 4 hingegen zeigt weiterhin den vom Codegenerator für die zweite Bitstelle generierten Code an. Eine Auswerteeinheit kann folglich erkennen, dass ein Öffnen des Zugangs stattgefunden hat, da die erste Bitstelle (des ersten Sensors 3) den vorgegebenen Wert "0" eingenommen hat. Der zweite Sensor 4 liefert hingegen auf seiner zugehörigen zweiten Bitstelle weiterhin den vom Codegenerator generierten Code. Folglich liegt einen Defekt in Hinblick auf den zweiten Sensor 4 vor. Besonders vorteilhaft hieran ist, dass ein derartiges Verriegelungssystem in ein bestehendes AS-Interface Safety at Work System integriert werden kann und die bestehende Kommunikation des AS-Interface Safety at Work Netzwerks weiterhin genutzt werden kann. Ein soeben beschriebener Defekt des zweiten Sensors 4 würde zu einer Codeverfälschung des von dem Verriegelungssystem ausgesandten Codes führen, was letztendlich zu einer Fehlermeldung in der Auswerteeinheit führt, welche wiederum eine Abschaltung und Verriegelung einer Gefahren verursachenden Anlage veranlassen würde. Der im Stand der Technik mögliche unsichere Zustand kann folglich vermieden werden.

## Patentansprüche

1. Verriegelungssystem (1) für einen sicherheitsgerichteten Zugangsbereich, aufweisend:
- einen Aktor (2), welcher dazu ausgebildet ist, den Zugangsbereich zu entriegeln,
- einen ersten und zweiten Sensor (3, 4), welche jeweils dazu ausgebildet sind, ein Öffnen des Zugangsbereichs oder einen Zugang in den Zugangsbereich zu detektieren und
- einen Codegenerator (5) zur Generierung eines Codes mit jeweils mindestens drei Bitstellen für ein Kommunikationsausgangssignal eines an dem Verriegelungssystem (1) anschließbaren Bussystems (6),
wobei das Verriegelungssystem (1) derart ausgebildet ist, dass
- durch das Detektieren des Öffnens des Zugangsbereichs oder des Zugangs in den Zugangsbereich durch den ersten Sensor (3) eine erste Bitstelle des Codes einen ersten vorgegebenen Wert einnimmt,
- durch das Detektieren des Öffnens des Zugangsbereichs oder des Zugangs in den Zugangsbereich durch den zweiten Sensor (4) eine zweite Bitstelle des Codes, welche von der ersten Bitstelle unterschiedlich ist, einen zweiten vorgegebenen Wert einnimmt, und
- durch das Entriegeln des Zugangsbereichs eine dritte Bitstelle des Codes, welche von der ersten und zweiten Bitstelle unterschiedlich ist, einen dritten vorgegebenen Wert einnimmt,
so dass eine Auswerteeinheit (7), welche mit dem Bussystem (6) verbunden ist-und den Code, welcher von dem Codegenerator (5) generiert wird, kennt, anhand einer Analyse des Codes, welcher von dem Verriegelungssystem (1) ausgesandt wurde, einen vorliegenden Zustand des Aktors (2), des ersten und zweiten Sensors (3, 4) feststellen kann.

2. Verriegelungssystem (1) für einen sicherheitsgerichteten Zugangsbereich nach Anspruch 1, wobei das Bussystem (6) ein AS-I Safety at Work-Bussystem (6) ist und demnach der Code vier Bitstellen aufweist, wobei das Verriegelungssystem (1), insbesondere der Aktor (2), derart ausgebildet ist, dass durch das Entriegeln ferner die vierte Bitstelle des Codes einen vierten vorgegebenen Wert einnimmt.

3. Verriegelungssystem (1) für einen sicherheitsgerichteten Zugangsbereich nach einem der vorhergehenden Ansprüche, wobei der erste Sensor (3) dazu ausgebildet ist, die erste Bitstelle mit dem ersten vorgegebenen Wert zu belegen, der zweite Sensor (4) dazu ausgebildet ist, die zweite Bitstelle mit dem zweiten vorgegebenen Wert zu belegen und der Aktor (2) dazu ausgebildet ist, die dritte Bitstelle mit dem dritten vorgegebenen Wert und, sofern vorhanden, die vierte Bitstelle mit dem vierten vorgegebenen Wert zu belegen.

4. Verriegelungssystem (1) für einen sicherheitsgerichteten Zugangsbereich nach einem der vorhergehenden Ansprüche, wobei der Aktor (2) eine Magnettürüberwachung, eine Türverriegelung, eine Verriegelungseinrichtung oder eine Sicherheitszuhaltung ist.

5. Verriegelungssystem (1) für einen sicherheitsgerichteten Zugangsbereich nach einem der vorhergehenden Ansprüche, wobei der erste und zweite Sensor (3, 4) eine Schutztürüberwachung, ein Näherungsschalter, ein zwangsgeführter Öffner oder eine Lichtschranke sind.

6. Automatisierungssystem aufweisend ein Verriegelungssystem (1) nach einem der Ansprüche 1 bis 5 und die Auswerteeinheit (7), wobei die Auswerteeinheit (7)
- über das Bussystem (6) mit dem Verriegelungssystem (1) verbindbar ist,
- einen Speicher zum Hinterlegen des vom Codegenerator (5) generierten Codes des Verriegelungssystems (1) und einer Bedeutung des ersten, zweiten, dritten und sofern vorhanden vierten vorgegebenen Wertes aufweist,
- Mittel zur Feststellung des vorliegenden Zustands und eines ordnungsgemäßen Betriebes des Aktors (2), des ersten und zweiten Sensors (3, 4) durch einen Vergleich des Codes, welcher von dem Verriegelungssystem (1) ausgesandt wurde, mit einem im Speicher hinterlegten Code und mit dem ersten, zweiten, dritten und sofern vorhanden vierten vorgegebenen Wert, aufweist.

7. Automatisierungssystem nach Anspruch 6, wobei die Auswerteeinheit (7) Analysemittel zum Analysieren der ersten Bitstelle und der zweiten Bitstelle des von dem Verriegelungssystem (1) ausgesandten Codes und Ausgabemittel zur Ausgabe einer Fehlermeldung aufweist.

8. Verfahren zur sicherheitsgerichteten Kommunikation eines Verriegelungssystem (1) für einen sicherheitsgerichteten Zugangsbereich, aufweisend:
- einen Aktor (2), welcher dazu ausgebildet ist, den Zugangsbereich zu entriegeln,
- einen ersten und zweiten Sensor (3, 4), welche jeweils dazu ausgebildet sind, ein Öffnen des Zugangsbereichs oder einen Zugang in den Zugangsbereich zu detektieren und
- einen Codegenerator (5) zur Generierung eines Codes mit jeweils mindestens drei Bitstellen für ein Kommunikationsausgangssignal eines an dem Verriegelungssystem (1) anschließbaren Bussystems (6),
mit folgenden Schritten:
- bei Vorliegen der Detektion des Öffnens des Zugangsbereichs oder des Zugangs in den Zugangsbereich durch den ersten Sensor (3) Belegen einer ersten Bitstelle des Codes mit einem ersten vorgegebenen Wert,
- bei Vorliegen der Detektion des Öffnens des Zugangsbereichs oder des Zugangs in den Zugangsbereich durch den zweiten Sensor (4) Belegen einer zweiten Bitstelle des Codes, welche von der ersten Bitstelle unterschiedlich ist, mit einem zweiten vorgegebenen Wert,
- bei Vorliegen der Entriegelung des Zugangsbereichs Belegen einer dritten Bitstelle des Codes, welche von der ersten und zweiten Bitstelle unterschiedlich ist, mit einem dritten vorgegebenen Wert,
so dass eine Auswerteeinheit (7), welche mit dem Bussystem (6) verbunden ist und den Code, welcher von dem Codegenerator (5) generiert wird, kennt, anhand einer Analyse des Codes, welcher von dem Verriegelungssystem (1) ausgesandt wurde, einen vorliegenden Zustand des Aktors (2), des ersten und zweiten Sensors (3, 4) feststellen kann.

9. Verfahren zur sicherheitsgerichteten Kommunikation in einem Automatisierungssystem aufweisend ein Verriegelungssystem (1) nach einem der Anspruche 1 bis 5, mit folgenden Sendeschritten:
- Generieren eines Codes von dem Codegenerator (5),
- bei Vorliegen der Detektion des Öffnens des Zugangsbereichs oder des Zugangs in den Zugangsbereich durch den ersten Sensor (3) Belegen einer ersten Bitstelle des Codes mit einem ersten vorgegebenen Wert,
- bei Vorliegen der Detektion des Öffnens des Zugangsbereichs oder des Zugangs in den Zugangsbereich durch den zweiten Sensor (4) Belegen einer zweiten Bitstelle des Codes mit einem zweiten vorgegebenen Wert,
- bei Vorliegen der Entriegelung des Zugangsbereichs Belegen einer dritten Bitstelle des Codes mit einem dritten vorgegebenen Wert und sofern eine vierte Bitstelle vorhanden ist Belegen einer vierten Bitstelle des Codes mit einem vierten vorgegebenen Wert,
- Aussenden des Codes durch die Verarbeitungseinheit (1), wobei das Automatisierungssystem ferner eine Auswerteeinheit (7) aufweist, wobei die Auswerteeinheit (7):
- über das Bussystem (6) mit dem Verriegelungssystem (1) verbunden ist,
- den vom Codegenerator (5) generierten Code des Verriegelungssystems (1) und einer Bedeutung des ersten, zweiten dritten und sofern vorhanden vierten vorgegebenen Wertes aufweist und
- Mittel zur Feststellung des vorliegenden Zustands und eines ordnungsgemäßen Betriebes des Aktors (2), des ersten und zweiten Sensors (3, 4) aufweist,
wobei das Verfahren folgende Vergleichsschritte aufweist:
- erster Vergleich ob der versandte Code des Verriegelungssystems (1) mit dem vom Codegenerator (5) generierten Code vollständig übereinstimmen, oder
- zweiter Vergleich ob die dritte Bitstelle des versandten Codes des Verriegelungssystems (1) mit dem dritten vorgegebenen Wert übereinstimmt, die erste Bitstelle des versandten Codes des Verriegelungssystems (1) mit einer ersten Bitstelle des vom Codegenerator (5) generierten Codes übereinstimmt, die zweite Bitstelle des versandten Codes des Verriegelungssystems (1) mit einer zweiten Bitstelle des vom Codegenerator (5) generierten Codes übereinstimmt und sofern die vierte Bitstelle vorhanden ist die vierte Bitstelle des versandten Codes des Verriegelungssystems (1) mit dem vierten vorgegebenen Wert übereinstimmt,
- dritter Vergleich ob die dritte Bitstelle des versandten Codes des Verriegelungssystems (1) mit dem dritten vorgegebenen Wert übereinstimmt, die erste Bitstelle des versandten Codes des Verriegelungssystems (1) mit dem ersten vorgegebenen Wert übereinstimmt, die zweite Bitstelle des versandten Codes des Verriegelungssystems (1) mit dem zweiten vorgegebenen Wert übereinstimmt und sofern die vierte Bitstelle vorhanden ist die vierte Bitstelle des versandten Codes des Verriegelungssystems (1) mit dem vierten vorgegebenen Wert übereinstimmt,
wobei bei einem Übereinstimmen des ersten, zweiten oder dritten Vergleiches eine ordnungsgemäße Funktion Verriegelungssystem (1) vorliegt und bei keiner Übereinstimmung des ersten, zweiten oder dritten Vergleiches ein Fehler vorliegt.

10. Verfahren zur sicherheitsgerichteten Kommunikation in einem Automatisierungssystem nach Anspruch 9, aufweisend folgenden Schritt:
- sofern der erste, zweite oder dritte Vergleich nicht übereinstimmt und die erste Bitstelle des versandten Codes des Verriegelungssystems (1) mit dem ersten vorgegebenen Wert übereinstimmt, Ausgabe einer Fehlermeldung sofern die zweite Bitstelle des versandten Codes des Verriegelungssystems (1) nicht mit dem zweiten vorgegebenen Wert übereinstimmt,
- sofern der erste, zweite oder dritte Vergleich nicht übereinstimmt und die zweite Bitstelle des versandten Codes des Verriegelungssystems (1) mit dem zweiten vorgegebenen Wert übereinstimmt, Ausgabe einer Fehlermeldung sofern die erste Bitstelle des versandten Codes des Verriegelungssystems (1) nicht mit dem ersten vorgegebenen Wert übereinstimmt,
wobei die Auswerteeinheit (7) Analysemittel zum Analysieren der ersten Bitstelle und der zweiten Bitstelle des von dem Verriegelungssystem (1) ausgesandten Codes und Ausgabemittel zur Ausgabe einer Fehlermeldung aufweist.

## Claims

1. Locking system (1) for a failsafe access area, comprising:
- an actuator (2) which is embodied to unlock the access area
- a first and second sensor (3, 4), each of which is embodied to detect an opening of the access area or access into the access area and
- a code generator (5) for generating a code with at least three bit positions respectively for a communication output signal of a bus system (6) which can be connected to the locking system (1),
wherein the locking system (1) is embodied such that
- by detecting the opening of the access area or the access into the access area by means of the first sensor (3), a first bit position of the code assumes a first predetermined value,
- by detecting the opening of the access area or the access into the access area by means of the second sensor (4), a second bit position of the code, which differs from the first bit position, captures a second predetermined value, and
- by unlocking the access area, a third bit position of the code, which differs from the first and second bit position, captures a third predetermined value,
so that an evaluation unit (7), which is connected to the bus system (6), and identifies the code which is generated by the code generator, can determine a current state of the actuator (2) of the first and second sensor (3, 4) with the aid of an analysis of the code which was emitted by the locking system (1).

2. Locking system (1) for a failsafe access area according to claim 1, wherein the bus system (6) is an AS-I Safety at Work bus system and accordingly the code comprises four bit positions, wherein the locking system (1), in particular the actuator (2), is embodied such that by means of unlocking the fourth bit position of the code also captures a fourth predetermined value.

3. Locking system (1) for a failsafe access area according to one of the preceding claims, wherein the first sensor (3) is embodied to occupy the first bit position with the first predetermined value, the second sensor (4) is embodied to occupy the second bit position with the second predetermined value and the actuator (2) is embodied to occupy the third bit position with the third predetermined value and, if available, to occupy the fourth bit position with the fourth predetermined value.

4. Locking system (1) for a failsafe access area according to one of the preceding claims, wherein the actuator (2) is a magnetic door control, a door locking device, a locking facility or a solenoid interlock.

5. Locking system (1) for a failsafe access area according to one of the preceding claims, wherein the first and second sensor (3, 4) are a protective door monitor, a proximity switch, a positively-driven opener or a light barrier.

6. Automation system comprising a locking system (1) according to one of claims 1 to 5 and the evaluation unit (7), wherein the evaluation unit (7)
- can be connected to the locking system (1) via the bus system (6),
- comprises a memory for storing the code of the locking system (1) generated by the code generator (5) and a significance of the first, second, third and if available fourth predetermined value,
- comprises means for establishing the current state and correct operation of the actuator (2), of the first and second sensor (3, 4) by comparison of the code, which was emitted by the locking system (1), with a code stored in the memory and with the first, second, third and if available fourth predetermined value.

7. Automation system according to claim 6, wherein the evaluation unit (7) comprises analysis means for analysing the first bit position and the second bit position of the code emitted by the locking system (1) and output means for outputting an error message.

8. Method for failsafe communication of a locking system (1) for a failsafe access area, comprising:
- an actuator (2) which is embodied to unlock the access area,
- a first and second sensor (3, 4) each of which is embodied to detect an opening of the access area or access into the access area and
- a code generator (5) for generating a code with at least three bit positions respectively for a communication output signal of a bus system (6) which can be connected to the locking system (1), having the following steps:
- if the opening of the access area or access into the access area is detected by the first sensor (3), occupying a first bit position of the code with a first predetermined value,
- if the opening of the access area or the access into the access area is detected by the second sensor (4), occupying a second bit position of the code, which differs from the first bit position, with a second predetermined value,
- if the access area is unlocked, occupying a third bit position of the code, which differs from the first and second bit position, with a third predetermined value,
so that an evaluation unit (7), which is connected to the bus system (6) and identifies the code which is generated by the code generator, can determine a current state of the actuator (2) of the first and second sensor (3, 4) with the aid of an analysis of the code which was emitted by the locking system (1).

9. Method for failsafe communication in an automation system comprising a locking system (1) according to one of claims 1 to 5, having the following emission steps:
- if a code is generated by the code generator (5),
- the opening of the access area or the access into the access area is detected by the first sensor (3), occupying a first bit position of the code with a first predetermined value,
- if the opening of the access area or the access into the access area is detected by the second sensor (4), occupying a second bit position of the code with a second predetermined value,
- if the access area is unlocked, occupying a third bit position of the code with a third predetermined value and if a fourth bit position is available occupying a fourth bit position of the code with a fourth predetermined value,
- emission of the code by the processing unit (1), wherein the automation system also comprises an evaluation unit (7), wherein the evaluation unit (7):
- is connected to the locking system (1) by way of the bus system (6),
- comprises the code of the locking system (1) generated by the code generator (5) and a significance of the first, second, third and if available fourth predetermined value, and
- means for establishing the current state and a correct operation of the actuator (2), of the first and second sensor (3, 4),
wherein the method comprises the following comparison steps:
- first comparison to determine whether the sent code of the locking system (1) completely corresponds to the code generated by the code generator (5) or
- second comparison to determine whether the third bit position of the sent code of the locking system (1) corresponds to the third predetermined value, the first bit position of the sent code of the locking system (1) corresponds to a first bit position of the code generated by the code generator (5), the second bit position of the sent code of the locking system (1) corresponds to a second bit position of the code generated by the code generator (5) and if the fourth bit position is available, the fourth bit position of the sent code of the locking system (1) corresponds to the fourth predetermined value,
- third comparison to determine whether the third bit position of the sent code of the locking system (1) corresponds to the third predetermined value, the first bit position of the sent code of the locking system (1) corresponds to the first predetermined value, the second bit position of the sent code of the locking system (1) corresponds to the second predetermined value and if the fourth bit position is available, the fourth bit position of the sent code of the locking system (1) corresponds to the fourth predetermined value,
wherein if the first, second or third comparison correspond a correct function of the locking system (1) exists and if the first, second or third comparison do not correspond, an error exists.

10. Method for failsafe communication in an automation system according to claim 9, comprising the following steps:
- if the first, second and third comparison do not correspond, and the first bit position of the sent code of the locking system (1) corresponds to the first predetermined value, outputting an error message, if the second bit position of the sent code of the locking system (1) does not correspond to the second predetermined value,
- if the first, second or third comparison do not correspond and the second bit position of the sent code of the locking system (1) corresponds to the second predetermined value, outputting an error message if the first bit position of the sent code of the locking system (1) does not correspond to the first predetermined value,
wherein the evaluation unit (7) comprises analysis means for analysing the first bit position and the second bit position of the code sent by the locking system 1 and output means for outputting an error message.

## Revendications

1. Système (1) de verrouillage d' une zone d'accès sécurisé, comportant :
- un actionneur ( 2 ), qui est constitué pour déverrouiller la zone d' accès,
- un premier et un deuxième capteurs ( 3, 4 ), qui sont constitués respectivement pour détecter une ouverture de la zone d' accès ou un accès dans la zone d' accès et
- un générateur ( 5 ) de code pour générer un code ayant respectivement au moins trois positions binaires pour un signal de sortie de communication d' un système ( 6 ) de bus pouvant être raccordé au système ( 1 ) de verrouillage, dans lequel le système ( 1 ) de verrouillage est constitué de manière
- à ce que, par la détection de l'ouverture de la zone d' accès ou de l'accès dans la zone d' accès par le premier capteur ( 3 ), une première position binaire du code prend une première valeur prescrite,
- en ce que, par la détection de l'ouverture de la zone d' accès ou de l'accès dans la zone d' accès par le deuxième capteur ( 4 ), une deuxième position binaire du code, qui est différente de la première position binaire, prend une deuxième valeur prescrite, et
- en ce que, par le déverrouillage de la zone d' accès, une troisième position binaire du code, qui est différente de la première et de la deuxième positions binaires, prend une troisième position prescrite,
de sorte qu' une unité ( 7 ) d' exploitation, qui est reliée au système ( 6 ) de bus et qui connaît le code produit par le générateur ( 5 ) de code, peut, au moyen d' une analyse du code qui a été envoyé par le système ( 1 ) de verrouillage, constater un état présent de l' actionneur ( 2 ) du premier capteur ( 3 ) et du deuxième capteur ( 4 ).

2. Système ( 1 ) de verrouillage pour une zone d' accès sécurisé suivant la revendication 1, dans lequel le système ( 6 ) de bus est un système AS-I Safety at Work-Bussystem ( 6 ) et, en conséquence, le code a quatre positions binaires, le système ( 1 ) de verrouillage, notamment 1' actionneur ( 2 ), étant constitué de manière à ce que par le déverrouillage, en outre, la quatrième position binaire du code prenne une quatrième valeur prescrite.

3. Système ( 1 ) de verrouillage pour une zone d' accès sécurisé suivant l'une des revendications précédentes, dans lequel le premier capteur ( 3 ) est constitué pour que la première position binaire soit occupée par la première valeur prescrite, le deuxième capteur ( 4 ) est constitué pour que la deuxième position binaire soit occupée par la deuxième valeur prescrite et 1' actionneur ( 2 ) est constitué pour que la troisième valeur binaire soit occupée par la troisième valeur prescrite et, dans la mesure où il y en a une, pour que la quatrième valeur binaire soit occupée par la quatrième valeur prescrite.

4. Système ( 1 ) de verrouillage pour une zone d' accès sécurisé suivant l'une des revendications précédentes, dans lequel 1' actionneur ( 2 ) est un contrôle de porte magnétique, un verrouillage de porte, un dispositif de verrouillage ou un arrêt de sécurité.

5. Système ( 1 ) de verrouillage pour une zone d' accès sécurisé suivant l'une des revendications précédentes, dans lequel le premier et le deuxième capteurs ( 3, 4 ) sont un contrôle de porte de protection, un commutateur de proximité, une gâche à guidage forcé ou une cellule photoélectrique.

6. Système d' automatisation comportant un système ( 1 ) de verrouillage suivant l'une des revendications 1 à 5 et 1' unité ( 7 ) d' exploitation, dans laquelle l'unité ( 7 ) d' exploitation
- peut être reliée au système ( 1 ) de verrouillage par le système ( 6 ) de bus,
- a une mémoire de mémorisation du code, produit par le générateur ( 5 ) de code, du système ( 1 ) de verrouillage et une signification de la première, deuxième et troisième et, dans la mesure où elle est présente, quatrième valeurs prescrites,
- comporte des moyens de constatation de l'état présent et d' un fonctionnement correct de 1' actionneur ( 2 ) du premier et du deuxième capteurs ( 3, 4 ),par une comparaison du code qui a été envoyé par le système ( 1 ) de verrouillage à un code mémorisé dans la mémoire et à la première, deuxième, troisième et, dans la mesure où elle est présente, quatrième valeurs prescrites.

7. Système d' automatisation suivant la revendication 6, dans lequel l'unité ( 7 ) d' exploitation a des moyens d' analyse,pour analyser la première position binaire et la deuxième position binaire du code envoyé par le système ( 1 ) de verrouillage,et des moyens d' émission,pour émettre un message d' erreur.

8. Procédé de communication sécurisée d' un système ( 1 ) de verrouillage d' une zone d' accès sécurisée, comportant :
- un actionneur ( 2 ), qui est constitué pour déverrouiller la zone d' accès,
- un premier et un deuxième capteurs ( 3, 4 ), qui sont constitués respectivement pour détecter une ouverture de la zone d' accès ou un accès dans la zone d' accès et
- un générateur ( 5 ) de code pour générer un code ayant respectivement au moins trois positions binaires pour un signal de sortie de communication d' un système ( 6 ) de bus pouvant être raccordé au système ( 1 ) de verrouillage, ayant les stades suivantes :
- en présence de la détection de l'ouverture de la zone d' accès ou de l'accès dans la zone d' accès par le premier capteur ( 3 ), occupation d' une premier position binaire du code par une première valeur prescrite,
- en présence de la détection de l'ouverture de la zone d' accès ou de l'accès dans la zone d' accès par le deuxième capteur ( 4 ), occupation d' une deuxième position binaire du code, qui est différente de la première position binaire, par une deuxième valeur prescrite,
- en présence du déverrouillage de la zone d' accès, occupation d' une troisième position binaire du code, qui est différente de la première et de la deuxième positions binaires, par une troisième valeur prescrite,
de sorte qu' une unité ( 7 ) d' exploitation, qui est reliée au système ( 6 ) de bus et qui connaît le code produit par le générateur ( 5 ) de code, peut, au moyen d' une analyse du code qui a été envoyée par le système ( 1 ) de verrouillage, constater un état présent de 1' actionneur ( 2 ), du premier capteur ( 3 ) et du deuxième capteur ( 4 ).

9. Procédé de communication sécurisée dans un système d' automatisation ayant un système ( 1 ) de verrouillage suivant l'une des revendications 1 à 5, comprenant les stades d' émission suivants :
- production d' un code par le générateur ( 5 ) de code,
- en présence de la détection de l'ouverture de la zone d' accès ou de l'accès dans la zone d' accès par le premier capteur ( 3 ), occupation d' une premier position binaire du code par une première valeur prescrite,
- en présence de la détection de l'ouverture de la zone d' accès ou de l'accès dans la zone d' accès par le deuxième capteur ( 4 ), occupation d' une deuxième position binaire du code, qui est différente de la première position binaire, par une deuxième valeur prescrite,
- en présence du déverrouillage de la zone d' accès, occupation d'une troisième position binaire du code, qui est différente de la première et de la deuxième positions binaires, par une troisième valeur prescrite et, dans la mesure où une quatrième position est présente, occupation d' une quatrième position binaire du code par une quatrième valeur prescrite,
- envoi du code par l'unité ( 1 ) de traitement,
le système d' automatisation comportant, en outre, une unité d' exploitation, l'unité ( 7 ) d'exploitation :
- étant reliée au système de verrouillage par le système ( 6 ) de bus,
- ayant le code produit par le générateur ( 5 ) de code du système ( 1 ) de verrouillage et une signification de la première, deuxième, troisième et, dans la mesure où elle est présente, quatrième valeurs et
- ayant des moyens de constatation de l'état présent et d' un fonctionnement correct de 1' actionneur ( 2 ) du premier et du deuxième capteurs ( 3, 4 ),
dans lequel le procédé a les stades de comparaison suivante
- première comparaison sur le point de savoir si le code envoyé du système ( 1 ) de verrouillage coïncide complètement avec le code produit par le générateur ( 5 ) de code, ou
- deuxième comparaison sur le point de savoir si la troisième position binaire du code envoyé du système ( 1 ) de verrouillage coïncide avec la troisième valeur prescrite, si la première position binaire du code envoyé du système ( 1 ) de verrouillage coïncide avec une première position binaire du code produit par le générateur ( 5 ) de code, si la deuxième position binaire du code envoyé du système ( 1 ) de verrouillage coïncide avec une deuxième position binaire du code produit par le générateur ( 5 ) de code et, dans la mesure où il y a une quatrième position binaire, si la quatrième position binaire du code envoyé du système ( 1 ) de verrouillage coïncide avec la quatrième valeur prescrite,
- troisième comparaison sur le point de savoir si la troisième position binaire du code envoyé du système ( 1 ) de verrouillage coïncide avec la troisième valeur prescrite, si la première position binaire du code envoyé du système ( 1 ) de verrouillage coïncide avec la première valeur prescrite, si la deuxième position binaire du code envoyé du système ( 1 ) de verrouillage coïncide avec la deuxième valeur prescrite et, dans la mesure où la quatrième position binaire est présente, si la quatrième position binaire du code envoyé du système ( 1 ) de verrouillage coïncide avec la quatrième valeur prescrite, dans lequel, s' il y a coïncidence dans la première, deuxième ou troisième comparaison, il y a un fonctionnement correct du système ( 1 ) de verrouillage et, s' il n' y a pas coïncidence dans la première, deuxième ou troisième comparaison, il y a un dysfonctionnement.

10. Procédé de communication sécurisée dans un système d' automatisation suivant la revendication 9, comportant les stades suivants :
- dans la mesure où il n' y a pas coïncidence dans la première, deuxième ou troisième comparaison et où la première position binaire du code envoyé du système ( 1 ) de verrouillage coïncide avec la première valeur prescrite, émission d' un message de dysfonctionnement, dans la mesure où la deuxième position binaire du code envoyé du système ( 1 ) de verrouillage ne coïncide pas avec la deuxième valeur prescrite,
- dans la mesure où il n' y a pas coïncidence dans la première, deuxième ou troisième comparaison et où la deuxième position binaire du code envoyé du système ( 1 ) de verrouillage coïncide avec la deuxième valeur prescrite, émission d' un message de dysfonctionnement, dans la mesure où la première position du code envoyé du système ( 1 ) de verrouillage ne coïncide pas avec la première valeur prescrite,
dans lequel l'unité ( 7 ) d' exploitation a des moyens d' analyse, pour analyser la première position binaire et la deuxième position binaire du code envoyé par le système ( 1 ) de verrouillage, et des moyens d' émission, pour émettre un message de dysfonctionnement.
